Europäisches Patentamt

European Patent Office

Office européen des brevets

(19)

(11) Veröffentlichungsnummer: **0 256 523**
**B1**

(12) EUROPÄISCHE PATENTSCHRIFT

(45) Veröffentlichungstag der Patentschrift:
06.12.89

(51) Int. Cl.⁴: **B65G 25/02**

(21) Anmeldenummer: 87111736.2

(22) Anmeldetag: **13.08.87**

(54) Transporteinrichtung.

(30) Priorität: **16.08.86 DE 3627866**

(43) Veröffentlichungstag der Anmeldung:
**24.02.88 Patentblatt 88/8**

(45) Bekanntmachung des Hinweises auf die Patenterteilung:
**06.12.89 Patentblatt 89/49**

(84) Benannte Vertragsstaaten:
**AT BE CH DE ES FR GB GR IT LI LU NL SE**

(56) Entgegenhaltungen:
**EP-A- 0 068 602
DE-A- 2 164 087
DE-A- 2 743 056
DE-A- 2 756 096
US-A- 4 217 978**

(73) Patentinhaber: **Wünsch, Adolf, Ried 215,
D-8959 Seeg(DE)**

(72) Erfinder: **Wünsch, Adolf, Ried 215, D-8959 Seeg(DE)**

(74) Vertreter: **Hübner, Hans-Jürgen, Dipl.-Ing.,
Mozartstrasse 31, D-8960 Kempten/Allgäu(DE)**

## Beschreibung

Die Erfindung betrifft eine Transporteinrichtung mit den Merkmalen des Oberbegriffes von Patentanspruch 1.

Eine derartige Transporteinrichtung ist etwa aus der DE-A- 21 64 087 bekannt. Zwar sind dort keine Einschub- und Ausschubvorrichtungen gezeigt. Diese gehören aber zu einem modernen Fertigungssystem.

Eine andere, aus der DE-A-27 56 096 bekannte Transporteinrichtung verwendet zwei Transportschienen mit einander zugewandten Aussparungen, wobei je zwei Aussparungen der beiden Schienen ein Klemmbackenpaar für einen Gegenstand bilden. Beide Schienen führen gemeinsame Längsbewegungen und gegenläufige Querbewegungen aus. Im Unterschied zum eingangs genannten Stand der Technik fehlen Führungsschienen. Die Gegenstände werden also zwischen je zwei Mitnehmern der beiden Schienen eingeklemmt und müssen dann an nicht weiter dargestellte Übernahmevorrichtungen abgegeben werden.

In den heute üblichen flexiblen Fertigungssystemen, werden die verschiedensten Werkstücke in ein- und derselben Maschine bearbeitet. Die beiden bekannten Transporteinrichtungen benötigen speziell gestaltete Transportschienen, die nur für eine bestimmte Art von Gegenständen geeignet sind. Ein Übergang auf andere Werkstücke würde das Austauschen der Transportschienen erforderlich machen. Nachteilig ist weiterhin, daß die Gegenstände oder Werkstücke in den einzelnen Arbeitspositionen nicht sicher festgehalten werden können. Beim Gegenstand der DE-OS 21 64 087 werden die Gegenstände lediglich auf den Ablageschienen aufgelegt. Sie können bei den weiteren Behandlungsmaßnahmen verrutschen, da Fixiermittel fehlen.

Beim Gegenstand der DE-OS 27 56 096 sind zwar die Gegenstände während des Transportes an den beiden Transportschienen festgelegt, nicht gezeigt ist aber, wie die Abnahme am Ende der Transportstrecke und Weitergabe an die nächste Station erfolgt.

Um beim Gegenstand der DE-A-21 64 087 die transportierten Gegenstände für die Bearbeitung festzuhalten, könnte man an den Arbeitspositionen Greifzangen vorsehen. Diese müßten jeweils durch anders gestaltete Greifzangen ersetzt werden, wenn sich die Form der zu transportierenden Gegenstände ändert. Außerdem müßten die Greifzangen die gesamten Reaktionskräfte beim Bearbeiten der Gegenstände aufnehmen, da die Ablageschienen keine z.B. seitliche Führungsfunktion haben. Würde man aber an Stelle der Ablageschienen Führungsschienen verwenden, so müßten diese ebenfalls beim Übergang auf andere Gegenstände ersetzt werden.

Aus der US-A 4 217 978 ist eine Transporteinrichtung bekannt, die zum Transport vom Werkstückstägern für je mindestens ein Werkstück dient. Die dort gezeigten Transportschienen bewegen sich wie beim Anmeldungsgegenstand auf einer Rechteckbahn und es sind auch Klemmeinrichtungen vorgesehen, um die Werkstückträger an den einzelnen Arbeitspositionen an separaten Arbeitsblöcken festzuklemmen. Nachteilig bei dieser Konstruktion ist aber, daß die Werkstückträger nur während des Leer-Rückhubes der Transportschienen festgeklemmt werden können, so daß die Bearbeitung ausschließlich während des Rückhubes – und genau genommen – nur während eines Teils des Rückhubes stattfinden kann. Außerdem werden die Werkstückträger während des Ausrückhubes und des Einrückhubes noch quer zu den Transportschienen bewegt, wodurch dieses Prinzip für extrem schnell laufende Einrichtungen für Hochleistungsmaschinen nicht einsetzbar ist. Die Transporteinrichtung nach der US-A 4 217 978 zielt weniger auf einen schnellen Transport- und Bearbeitungszyklus hin, als vielmehr auf eine hochgenaue Positionierung der Werkstückträger. Aus diesem Grund müssen der Arbeitshub, der Ausrückhub und eine in Längsrichtung erfolgende Positionierkorrektur nacheinander ausgeführt werden, bevor der Werkstückträger festgeklemmt werden kann.

Aufgabe der Erfindung ist es, die Transporteinrichtung der eingangs genannten Art so auszubilden, daß sie für eine Vielzahl unterschiedlicher Gegenstände und Werkstücke geeignet ist, ohne an ihr Umbauarbeiten vornehmen zu müssen und daß die zu bearbeitenden Gegenstände an der Transporteinrichtung in den einzelnen Arbeitspositionen so fixiert sind, daß die beim Bearbeiten auftretenden Reaktionskräfte nicht zu einer Verschiebung der Gegenstände führen.

Diese Aufgabe wird durch eine Transporteinrichtung mit den Merkmalen des Patentanspruches 1 gelöst.

Da die Werkstücke nicht mehr direkt von den Transportschienen bewegt werden, sondern ihrerseits in Werkstückträgern positioniert sind, wird die Transporteinrichtung wesentlich flexibler, da die Werkstückträger lediglich mit passenden Masken für die jeweils zu behandelnden Werkstücken ausge stattet werden müssen, selbst aber keine äußerliche Veränderung erfahren, sodaß sie immer in die Transporteinrichtung passen. Diese Werkstückträger können daher sehr genau an der Führungsschiene geführt werden, weil diese an die Werkstückträger ein für allemal angepaßt ist. Aufgrund dieser Paßgenauigkeit ist es nun sehr einfach möglich, Klemmvorrichtungen einzusetzen, die die Werkstückträger an der vorhandenen Führungsschiene festklemmen, sodaß auch große Reaktionskräfte beim Bearbeiten der Werkstücke aufgenommen werden können.

In den Unteransprüchen sind Ausgestaltungen und Weiterbildungen der Erfindung unter Schutz gestellt.

Anhand der Zeichnung, die Ausführungsbeispiele der Erfindung darstellt, sei diese näher beschrieben.

Es zeigt

FIG. 1 eine schematische Draufsicht auf eine Ausführungsform der neuen Transporteinrichtung,

FIG. 2 eine Schnittansicht längs der Linie 2-2 der FIG. 1,

FIG. 3 eine Ansicht eines Teils der Transporteinrichtung etwa gemäß FIG. 2 jedoch in größerem Maßstab,

FIG. 4 eine Draufsicht auf eine abgewandelte Ausführungsform der Transporteinrichtung,

FIG. 5 eine Schnittansicht der Transportvorrichtung entlang der Linie 5-5 der FIG. 4,

FIG. 6 eine schematische Querschnittansicht etwa längs der Linie 6-6 der FIG. 5,

FIG. 7 eine Querschnittansicht eines Details einer Klemmvorrichtung zum Festklemmen der Werkstückträger in der Führungsschiene,

FIG. 8 eine Draufsicht auf die Führungsschiene mit Klemmvorrichtung gemäß FIG. 7,

FIG. 9 eine schematische Querschnittansicht der Führungsschiene bei der Ausführung gemäß Figuren 1 bis 3,

FIG. 10 eine Draufsicht auf die Führungsschiene gemäß FIG. 9 und

FIG. 11 eine schematische Seitenansicht der Einschubvorrichtung zur Überführung der Werkstückträger aus der Hauptführungsbahn in die Führungsschiene der Bearbeitungsmaschine

Einer Bearbeitungsmaschine , beispielsweise einem Stanzbiege-Automaten 10 ist eine Führungsschiene 12 zugeordnet, die sich unterhalb einer Reihe an Bearbeitungsaggregaten 14 der Bearbeitungsmaschine 10 und parallel zu deren Vorderwand erstreckt. Eine Führungsbahn 16, die ein endloses Transportband aufweist, liefert Werkstücke 18 tragende Werkstückträger 20 an, die sich vor einem Querschieber 22 stauen. Unmittelbar vor dem Querschieber 22 zweigt von der Führungsbahn 16 eine Verbindungsbahn 24 ab, die in die Führungsschiene 12 einläuft. Am anderen Ende der Führungsschiene verbindet eine entsprechende Verbindungsbahn 26 die Führungsschiene 12 mit der Führungsbahn 16, die hier vor und hinter der Verbindungsbahn 26 jeweils einen Querschieber 22 aufweist. Mittels einer Einschubvorrichtung 28 wird der unmittelbar vor dem vorderen Querschieber 22 stehende Werkstückträger 20 auf der Verbindungsbahn 24 an den Anfang der Führungsschiene 12 verbracht. Falls die Werkstücke 18 auf den davor stehenden Werkstückträgern 20 in der Bearbeitungsmaschine 10 nicht zu bearbeiten sind, wird der Querschieber 22 zurückgezogen werden, sodaß die Werkstückträger auf der Führungsbahn 16 weitertransportiert werden können.

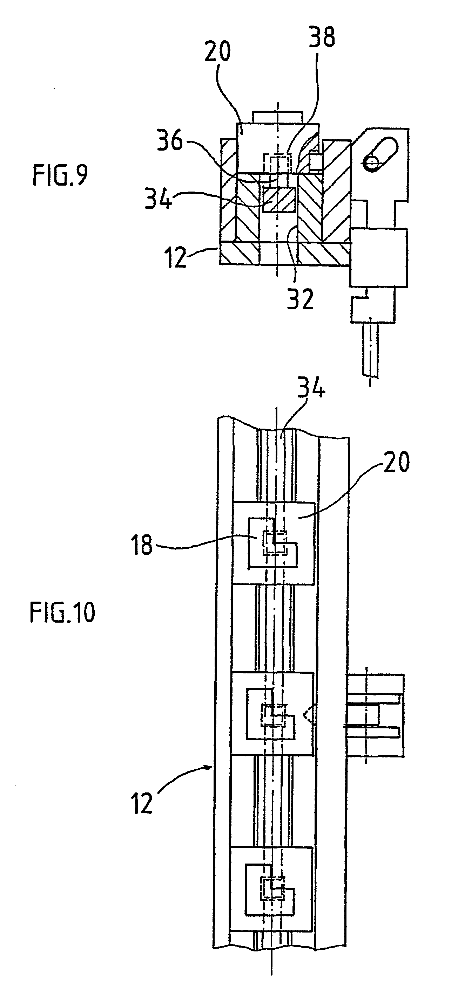

Die Führungsschiene 12 ist, wie aus den Figuren 9 und 10 hervorgeht bodenseitig geschlitzt. In diesen Bodenschlitz 32 ist eine Transportschiene 34 aufgenommen, die sich über den größten Teil der Länge der Führungsschiene 12 erstreckt und die in gleichen Abständen x nach oben stehende Mitnehmer 36 aufweist, welche in Bodenausnehmungen 38 der Werkstückträger 20 eingreifen, wenn sich die Transportschiene 34 in der Transportstellung befindet (FIG. 9). Genau genommen ist die zwischen dem vordersten Mitnehmer 36 und dem hintersten Mitnehmer 36 der Transportschiene 34 um das Mitnehmer-Abstandsmaß x kürzer als die Länge der Führungsschiene 12, gemessen zwischen den Mittellinien der beiden Verbindungsbahnen 24, 26.

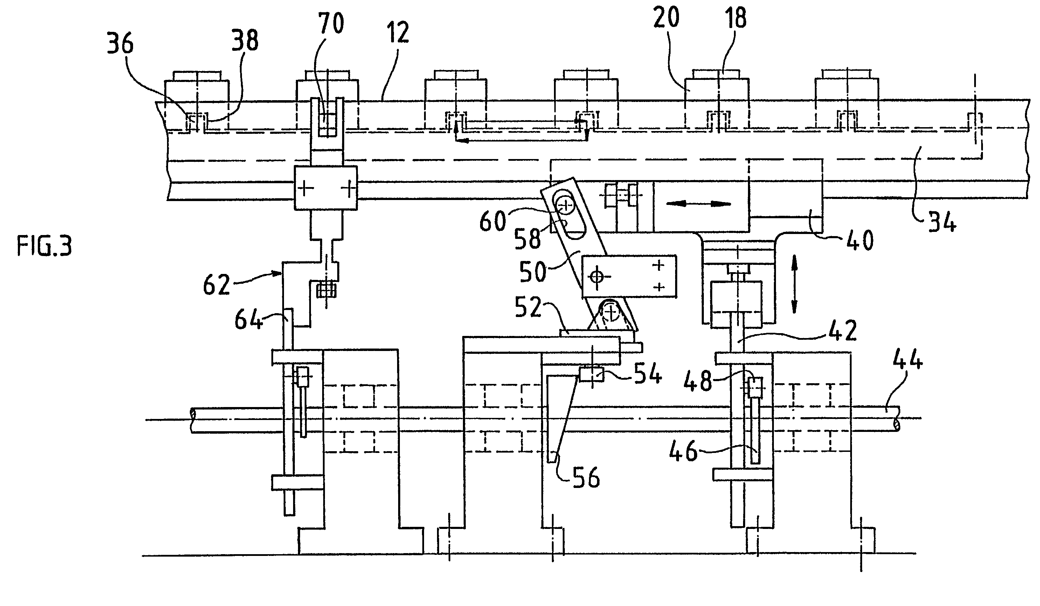

Die Transportschiene 34 hat nahe ihrer Enden eine seitliche Schwalbenschwanzausführung, mittels deren sie verschiebbar in Haltern 40 abgestützt ist, die an Hubstangen 42 befestigt sind. Auf einer Hauptantriebswelle 44, die sich parallel zu der Führungsschiene 12 erstreckt, sitzen Kurvenscheiben 46, mit deren Umfängen Abnahmerollen 48 in Berührung stehen, die an Auslegern der Hubstangen 42 drehbar gelagert sind. Die Kurvenscheiben 46 sind so ausgebildet, daß die Hubstangen 42 und damit die Transportschiene 34 einen kurzen Abwärtshub ausführt, der ausreicht, um die Mitnehmer 36 aus den Ausnehmungen 38 der Werkstückträger 20 austreten zu lassen, wonach die Transportschiene 34 in sie abgesenkten Stellung eine gewisse Zeit verbleibt, bis die anschließend wieder auf die ursprüngliche Höhe angehoben wird, in der die Hubstangen 42 erneut verharren, bis dasselbe Arbeitsspiel von neuem beginnt. Die Antriebsvorrichtung für die Transportschiene 34 weist weiterhin eine Antriebseinheit für den horizontalen Hin- und Hergang auf. Dazu ist ein Schwenkhebel 50 an einem parallel zur Transportschiene 34 verfahrbaren Schlitten 52 schwenkbar gelagert, der mit einer Abnahmerolle 54 an einer Topfscheibe 56 der Antriebswelle 44 in Anlage gehalten wird. Das obere Ende des Schwenkhebels 50 weist ein Langloch 58 auf, in das ein Zapfen 60 der Transportschiene 34 eingreift. Die Topfscheibe 56 bewegt die Transportschiene 34 während der Stillstandzeiten der Hubstangen 42 in Längsrichtung der Transportschiene 34 hin und her, sodaß sich ein Bewegungszyklus der Transportschiene 34 in Form einer Rechteckbahn ergibt, wie in FIG. 3 durch den geschlossenen Pfeilzug angedeutet ist.

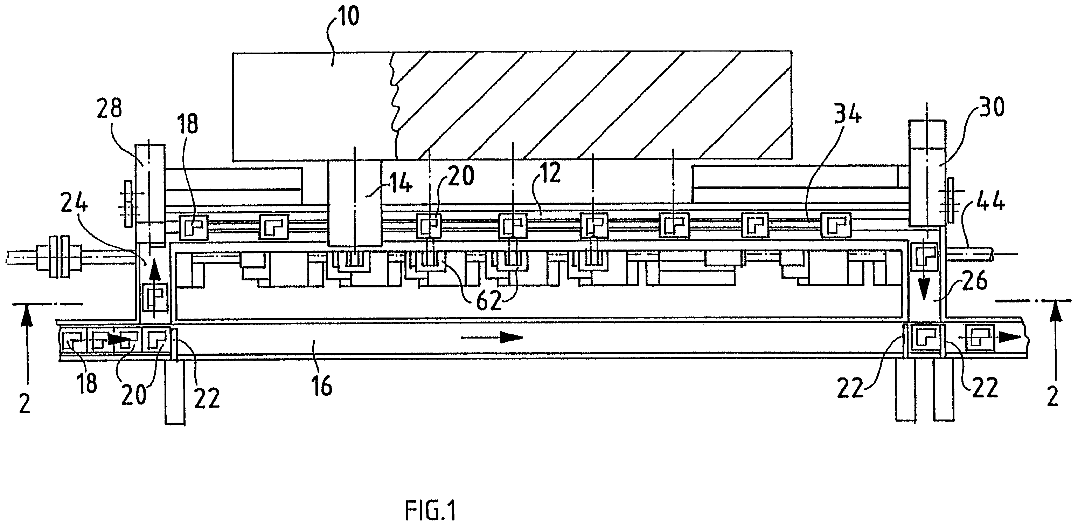

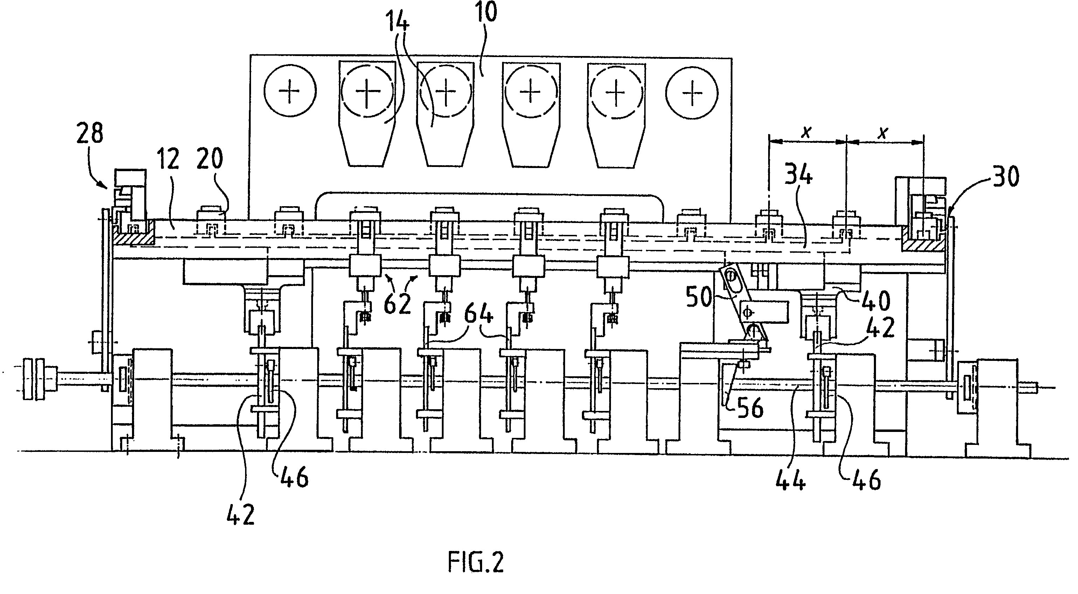

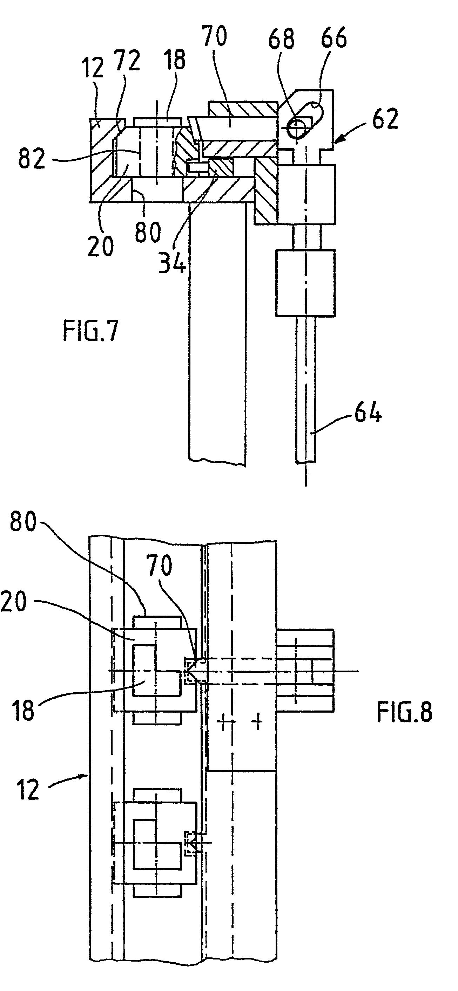

Ausgehend von der Darstellung gemäß FIG. 2 findet also zuerst der Arbeitshub der Transportschiene 34 um die Strecke x nach rechts statt, wodurch alle Werkstückträger 20 um dieses Maß x nach rechts transportiert werden. Die Bearbeitungsaggregate 14 sind ebenfalls im Abstand x voneinander angeordnet, sodaß die Werkstückträger 20 unterhalb jedes Bearbeitungsaggregates 14 in eine Arbeitsposition gelangen. Sobald der Schwenkhebel 50 in seine Endlage nach rechts geschwenkt ist, werden alle Werkstückträger 20 an der Führungsschiene 12 festgeklemmt. Dazu dienen Klemmvorrichtungen 62, wobei in der Ausführung gemäß Figuren 1 bis 3 jeder Arbeitsposition unterhalb eines Bearbeitungsaggregates 14 eine solche Klemmvorrichtung 62 zugeordnet ist. Die Klemmvorrichtungen 62 sind ähnlich aufgebaut wie die Hubvorrichtungen für die Transportschiene 34 und weisen eine Kurvenscheibe auf der Antriebswelle 44 auf, mit der ein Abnahmerad einer Hubstange 64 in Eingriff steht. Die Hubstange 64 hat einen Kopf mit einem schrägliegenden Langloch 66, in das ein Zapfen 68 eines Schiebers 70 eingreift, der rechtwinklig zur Längsrichtung der Führungsschiene 12 in deren einer Seitenwand verschiebbar geführt ist. Das vordere Ende des Schiebers 70 ist keilförmig ausgebildet und die Werkstückträger 20 weisen seitliche Ausnehmungen mit einer komplementären Keilform auf, sodaß beim Einschieben der Schieber 70 in die in den Figuren 7 und 8 dargestellte Stellung die Werkstückträger 20 zuerst exakt positioniert werden und dann an der Führungsschiene 12 festgeklemmt werden, wozu die den Schiebern 70 gegenüberliegende Seitenwand der Führungsschiene 12 eine Schrägfläche 72 aufweist, welche eine entsprechende Schrägfläche des Werkstückträgers 20 übergreift. Der Werkstückträger 20 wird somit positionsgenau festgeklemmt. Nachdem dies geschehen ist, führt die Transportschiene 34 den Ausrückhub, den horizontalen Leerrückhub und den erneuten Einrückhub aus. In dieser Zeit werden alle Werkstücke 18 auf den Werkstückträgern 20 durch die Bearbeitungsaggregate 14 bearbeitet. Dann wird die Hubstange 64 jeder Klemmvorrichtung 62 abwärts bewegt, wodurch der entsprechende Schieber 70 zurückgezogen wird, sodaß die Werkstücke 20 anschließend von der Transportschiene 34 um einen weiteren Hub x weiter verschoben werden können.

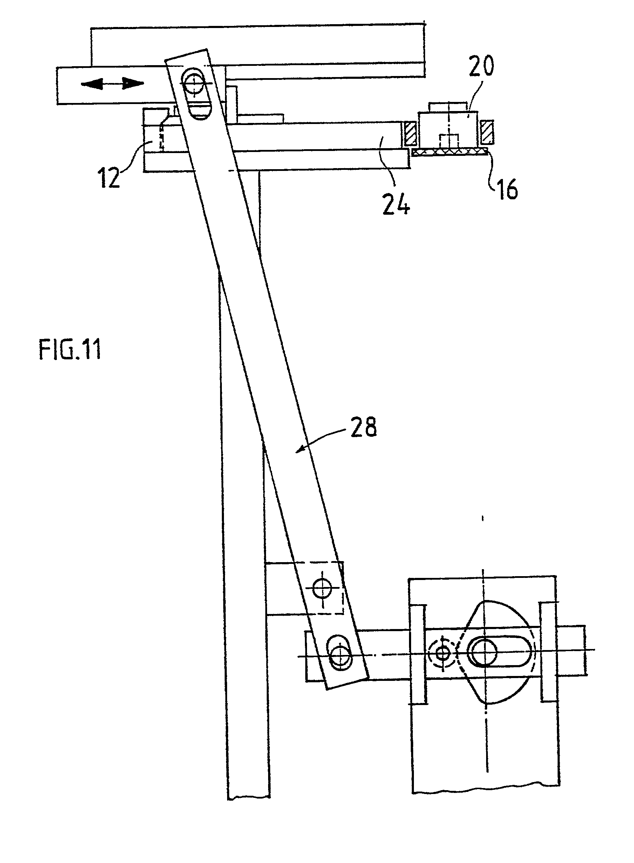

In der Bewegungsperiode der Transportschiene 34 außerhalb des Arbeitshubes nach rechts treten die Einschubvorrichtung 28 und die Ausschubvorrichtung 30 in Funktion, deren Arbeitsweise in FIG. 11 schematisch veranschaulicht ist. Ein horizontaler Schieber mit Abnahmerolle wird von einer Kurvenscheibe der Hauptantriebswelle 44 hin- und herbewegt. Der Schieber schwenkt einen Schwenkarm, der einen Greifer oberhalb der Verbindungsbahn 24 hin- und herbewegt. Der Greifer hat eine vordere Schwenkplatte, die beim Hub nach rechts (FIG. 11) über den Werkstückträger 20 hinwegschwenkt und beim Hub nach links einen Werkstückträger 20 von der Führungsbahn 16 auf die Führungsschiene 12 zieht. Die Ausschubvorrichtung 30 ist entsprechend ausgebildet. Der Schieber benötigt hier keine Schwenkklappe, vielmehr hat er eine feste Platte, die in die Bewegungsbahnen der Werkstückträger 20 hineinragt und mit der diese aus der Führungsschiene 12 auf der Verbindungsbahn 26 bis in die Führungsbahn 16 geschoben wurden.

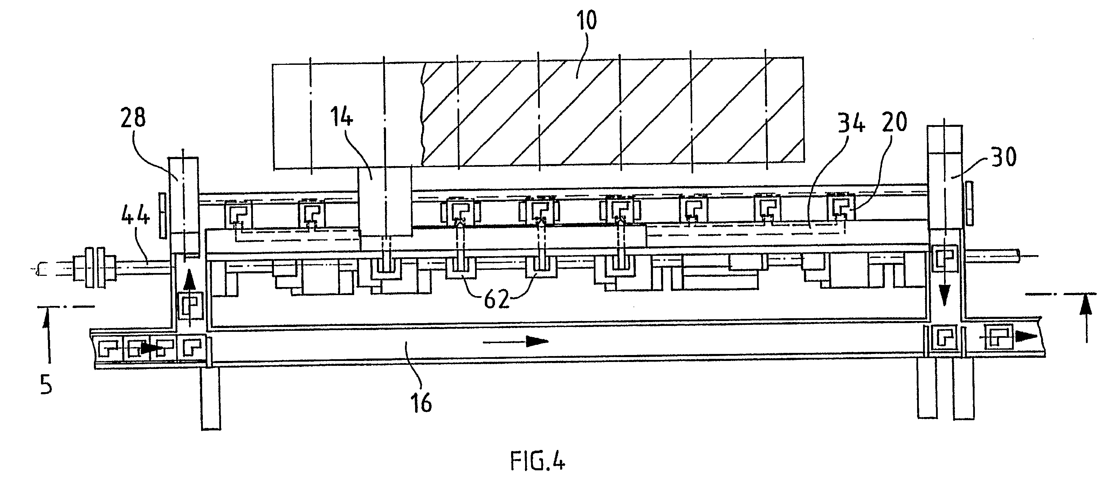

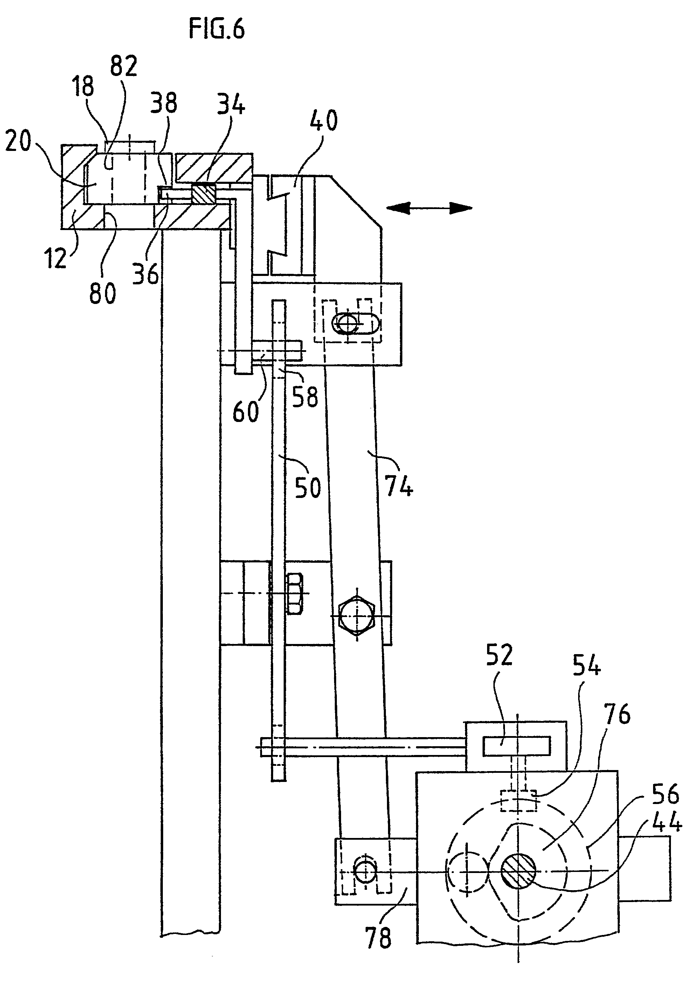

Die Ausführung gemäß der Figuren 4 bis 8 unterscheidet sich von der vorbeschriebenen Ausführung im wesentlichen dadurch, daß die Transportschiene 34 seitlich neben der Führungsschiene 12 angeordnet ist. Statt der Hubstangen 42 sind Schwenkarme 74 vorgesehen, die je von einer Kurvenscheibe 76 der Hauptantriebswelle 44 über einen Horizontalschieber 78 mit Abnahmerolle verschwenkt werden. Am oberen Ende des Schwenkarmes 74 sitzt ein Kopf, der den Halter 40 trägt, in welchem die Transportschiene 34 durch die Schwalbenschwanzführung verschiebbar gehaltert ist. Die Ausrückbewegung und die Einrückbewegung der Transportschiene 34 finden also in den Richtungen des Doppelpfeiles gemäß FIG. 6 statt. Die Werkstückträger 20 haben hier die Ausnehmung 38 an einer Seitenfläche, sodaß die ebenfalls liegend angeordneten Mitnehmer 36 seitlich in die Ausnehmungen 38 eintreten können.

Die Ausführung gemäß der Figuren 4 bis 8 bringt den Vorteil, daß die Bearbeitungsmaschine 10 auch eine untere Reihe von Bearbeitungseinheiten 14 aufweisen kann, welche durch die Führungsschiene 12 und die Werkstückträger 20 hindurch von unten her das Werkstück 18 bearbeiten können. Zu diesem Zweck ist im Bereich jeder Arbeitsposition im Boden der Führungsschiene 12 eine Öffnung 80 vorgesehen und die Werkstückträger 20 haben Durchbrüche 82, durch die hindurch die Werkstücke 18 von unter her zugänglich sind.

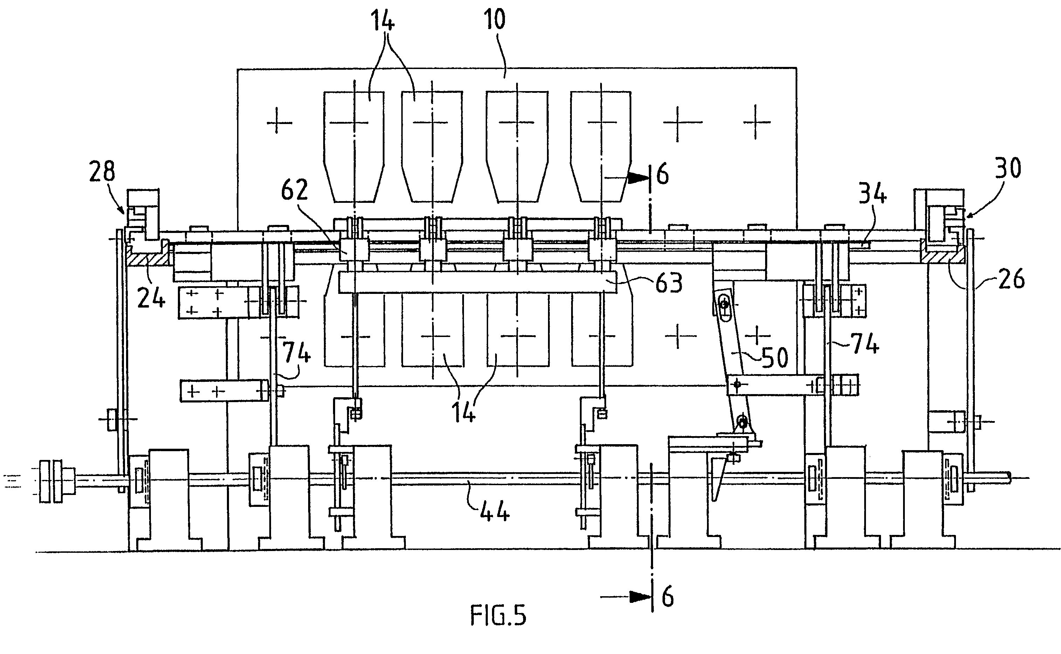

Die Ausführung gemäß FIG. 5 unterscheidet sich noch von der erstbeschriebenen Ausführung dadurch, daß die Klemmvorrichtungen 62 für alle Arbeitsposition an einer gemeinsamen Klemmschiene 63 befestigt sind, die von zwei Hubstangen auf- und abbewegt wird, um entsprechend FIG. 7 die Klemmschieber seitlich hin- und herzubewegen.

## Patentansprüche

1. Transporteinrichtung für an verschiedenen Arbeitspositionen nacheinander zu bearbeitende oder zu montierende Werkstücke, mit einer, sich längs einer Anzahl Arbeitspositionen erstreckenden Führungsschiene (12), an deren Enden jeweils eine Einschub- bzw. eine Ausschubvorrichtung (28; 30) angeordnet sind, und mit einer parallel und benachbart der Führungsschiene (12) gelagerten Transportschiene (34), die in gleichen Abständen Mitnehmer (36) aufweist, und an der eine Antriebsvorrichtung (42,50) angreift, die ihr einen dauernd wiederholten Bewegungszyklus längs einer wenigstens angenäherten Rechteckbahn mit einem Arbeitshub in Längsrichtung der Führungsschiene (12), einem Ausrückhub, einem Rückhub parallel zum Arbeitshub und einem Einrückhub mitteilt, dadurch gekennzeichnet, daß an der Führungsschiene (12) je mindestens ein Werkstück tragende Werkstückträger (20) geführt, durch formschlüssigen Eingriff der Mitnehmer (36) der Transportschiene (34) verschiebbar und mittels den Arbeitspositionen zugeordneter Klemmvorrichtungen (62) während mindestens eines Teils der nicht den Arbeitshub umfassenden Rechteckbahn der Transportschiene (34) an der Führungsschiene (12) festklemmbar sind.

2. Transporteinrichtung nach Anspruch 1, dadurch gekennzeichnet, daß die Klemmvorrichtungen (62) Schieber (70) mit keilförmigen Enden aufweisen, die in komplementären Öffnungen der Werkstückträger (20) selbstzentrierend eingreifen.

3. Transporteinrichtung nach Anspruch 1 oder 2, dadurch gekennzeichnet, daß die Klemmvorrichtungen (62) eine Klemmschiene (63) mit starr an dieser angebrachten oder an dieser beweglich gelagerten Schiebern (70) um fassen und daß die Klemmschiene (63) quer zu ihrer Längserstreckung zwischen einer Klemmstellung und einer Ruhestellung hin- und her verschiebbar gelagert ist.

4. Transporteinrichtung nach einem der Ansprüche 1 bis 3, dadurch gekennzeichnet, daß der Boden der Führungsschiene (12) mindestens im Bereich der Arbeitspositionen Öffnungen (80) zum Durchtritt von Bearbeitungs- oder Haltewerkzeugen aufweist, daß die Werkstückträger (20) von unten nach oben reichende Durchbrüche (82) aufweisen, durch die hindurch die Werkstücke (18) von unten her zugänglich sind und daß die Transportschiene (34) seitlich neben der Führungsschiene (12) angeordnet ist.

5. Transporteinrichtung nach einem der Ansprüche 1 bis 4, dadurch gekennzeichnet, daß sich parallel zur Führungsschiene (12) eine Führungsbahn (16) erstreckt, von der im Bereich der Ein- und Ausschubvorrichtungen (28,30) Verbindungsbahnen (24,26) abzweigen, die in die Führungsschiene (12) münden, und daß die Führungsbahn (16) hinter mindestens einer der Verbindungsbahnen (24,26) durch einen Querschieber (22) absperrbar ist.

6. Transporteinrichtung nach einem der Ansprüche 1 bis 5, dadurch gekennzeichnet, daß die Antriebsvorrichtung für die Transportschiene (34) einen von einer rotierenden Kurventopfscheibe (56) angetriebenen Schwenkhebel (50) für den Arbeitshub und den Rückhub der Transportschiene (34), sowie zwei kurvengesteuerten Hubstangen (42) oder Schwenkarme (74) aufweist, die die Transportschiene (34) abstützen und sie während der Stillstandzeiten des Schwenkhebels (50) in dessen Endschwenklagen rechtwinklig zu ihrer Längsrichtung bewegen und daß die Transportschiene (34) in Schiebeführungen (40) der Hubstangen (42) oder Schwenkarme (74) gelagert ist.

7. Transporteinrichtung nach einem der Ansprüche 1 bis 6, dadurch gekennzeichnet, daß eine Hauptantriebswelle (44) parallel zur Führungsschiene (12) vorgesehen ist, von der über Kurven- und Topfscheiben (46, 56) die Bewegungen der Transportschiene (34) und der Klemmvorrichtungen (62) abgeleitet sind.

8. Transporteinrichtung nach einem der Ansprüche 1 bis 7, dadurch gekennzeichnet, daß die Führungsschiene (12) Seitenwände aufweist, an oder oberhalb deren einer die Klemmvorrichtungen (62) mit den Werkstückträgern (20) in Eingriff treten und daß die andere Seitenwand eine, die Werkstückträger (20) übergreifende innere Schrägfläche (72) aufweist, an welche sich die Werkstückträger (20) mit einer komplementären Schrägfläche anlegen.

9. Transporteinrichtung nach einem der Ansprüche 1 bis 8, dadurch gekennzeichnet, daß die Transportschiene (34) eine zwischen dem ersten und letzten Mitnehmer (36) gemessene Länge hat, die um einen Mitnehmerabstand (x) kürzer als die zwischen den Mittellinien der Ein- und Ausschubvorrichtungen (28, 30) gemessene Länge der Führungsschiene (12) ist.

**Claims**

1. A transport installation for workpieces which are to be machined or assembled one after the other at different working positions, having a guide rail (12) which extends along a plurality of working positions and at each of whose ends there is arranged an insertion and/or an expulsion-device (28; 30), and having a transport rail (34) which is mounted parallel and adjacent to the guide rail (12) and which has equidistantly spaced entrainment members (36) and whereon there engages a drive device (42, 50) which imparts thereto a continuously repeated movement cycle along an at least approximately rectangular path, with a working stroke in the longitudinal direction of the guide rail (12), a release stroke, a return stroke parallel to the working stroke, and an engaging stroke, characterised in that on the guide rail (12) workpiece carriers (20) are guided, each of which carries at least one workpiece and which are slidable by means of form-locking engagement of the entrainment members (36) of the transport rail (34) and which can be clamped securely on the guide rail (12) by means of clamping devices (62) which are associated with the working positions, during at least a part of the rectangular path of the transport rail (34) which does not comprise the working stroke.

2. A transport installation according to claim 1, characterised in that the clamping devices (62) have sliding members (70) with wedge-shaped ends, which engage self-centeringly into complementary openings of the workpiece carriers (20).

3. A transport installation according to claim 1 or 2, characterised in that the clamping devices (62) comprise a clamping rail (63) with sliding members (70) which are attached rigidly thereon or are mounted movably thereon, and in that the clamping rail (63) is mounted in such a manner as to be slidable to and fro, transversely to its longitudinal extent, between a clamping position and a rest position.

4. A transport installation according to any one of claims 1 to 3, characterised in that the bottom of the guide rail (12) has, at least in the region of the working positions, openings (80) for the through-passage of machining- or holding-tools, in that the workpiece carriers (20) have apertures (82) which extend upwardly from below and wherethrough the workpieces (18) are accessible from the underneath direction, and in that the transport rail (34) is arranged laterally adjacent to the guide rail (12).

5. A transport installation according to any one of claims 1 to 4, characterised in that parallel to the guide rail (12) there extends a guide path (16), wherefrom there branch off, in the region of the insertion- and expulsion-devices (28, 30), connecting paths (24, 26) which open into the guide rail (12), and in that the guide path (16) can be blocked behind at least one of the connecting paths (24, 26) by means of a transverse sliding member (22).

6. A transport installation according to any one of claims 1 to 5, characterised in that the drive device for the transport rail (34) has a pivoting lever (50), driven by a rotating cam cup-wheel (56), for the working stroke and the return stroke of the transport rail (34), and also two cam-controlled lifting rods (42) or swivel arms (74), which support the transport rail (34) and move it at right angles to its longitudinal direction during the standstill times of the pivoting lever (50) in the end pivoting positions thereof, and in that the transport rail (34) is mounted in sliding guides (40) of the lifting rods (42) or swivel arms (74).

7. A transport installation according to any one of claims 1 to 6, characterised in that a main drive shaft (44) is provided parallel to the guide rail (12), wherefrom the movements of the transport rail (34) and of the clamping devices (62) are derived by way of cam disc and cup-wheel (46, 56).

8. A transport installation according to any one of claims 1 to 7, characterised in that the guide rail (12) has side walls whereon, or above one of which, the clamping devices (62) come into engagement with the workpiece carriers (20), and in that the other side wall has an inner sloping surface (72) which engages over the workpiece carriers (20) and against which the workpiece carriers (20) lie with a complementarily sloping surface.

9. A transport installation according to any one of claims 1 to 8, characterised in that the transport rail (34) has a length which is measured between the first and last entrainment member (36) and which is shorter by one spacing distance (x) between entrainment members than the length of the guide rail (12) measured between the centre lines of the insertion- and expulsion-devices (28, 30).

**Revendications**

1. Installation de transport pour pièces à usiner ou à monter successivement en différentes positions d'usinage, avec un rail de guidage (12) s'étendant le long d'un certain nombre de positions d'usinage, à chaque extrémité duquel il est disposé un dispositif d'alimentation ou de dégagement (28; 30) et avec un rail de transport (34) disposé parallèlement au et près du rail de guidage (12), présentant, à des intervalles identiques, des entraîneurs (36), et dans lequel s'engage un dispositif d'entraînement (42, 50), qui lui transmet un cycle de mouvement répété en continu suivant un tracé rectangulaire au moins approximatif, avec une course de travail dans le sens longitudinal du rail de guidage (12), une course de dégagement, une course de déplacement parallèle à la course de travail et une course d'alimentation, caractérisée en ce qu'il est guidé, sur le rail de guidage (12), des porte-pièces (20), portant, chacun, au moins une pièce, pouvant être déplacés par engagement, suivant la forme, des entraîneurs (36) du rail de transport (34) et pouvant être fixés au rail de guidage (12) à l'aide des dispositifs de serrage (62) correspondant aux positions d'usinage, pendant au moins une partie du tracé rectangulaire du rail de transport (34), ne comprenant pas la course de travail.

2. Installation de transport suivant la revendication 1, caractérisée en ce que les dispositifs de serrage (62) présentent des coulisseaux (70) à extrémités coniques s'engageant de manière autocentrante dans des ouvertures complémentaires des porte-pièces (20).

3. Installation de transport suivant la revendication 1 ou 2, caractérisée en ce que les dispositifs de serrage (62) comprennent un rail de bridage (63) avec des coulisseaux (70) fixés à ce dernier de manière rigide ou placés sur ce dernier de manière mobile et que le rail de bridage (63) est placé transversalement par rapport à son extension longitudinale, de manière à pouvoir se déplacer en va-et-vient entre une position de bridage et une position de repos.

4. Installation de transport suivant l'une ou l'autre des revendications 1 à 3, caractérisée en ce que le fond du rail de guidage (12) présente, au moins à l'endroit des positions d'usinage, des ouvertures (80) pour le passage des outils d'usinage ou de maintien, que les porte-pièce (20) présentent des passages (82) allant de bas en haut, au travers desquels les pièces à usiner (18) sont accessibles du dessous et que le rail de transport (34) est disposé latéralement à côté du rail de guidage (12).

5. Installation de transport suivant l'une ou l'autre des revendications 1 à 4, caractérisée en ce qu'il s'étend, parallèlement au rail de guidage (12), une ligne de guidage (16) de laquelle sont dérivés, à l'endroit des dispositifs d'alimentation et de dégagement (28, 30), des lignes de liaison (24, 26) aboutissant au rail de guidage (12) et que la ligne de guidage (16) peut être arrêtée derrière au moins une des lignes de liaison (26, 26), par un coulisseau transversal (22).

6. Installation de transport suivant l'une ou l'autre des revendications 1 à 5, caractérisée en ce que le dispositif d'entraînement pour le rail de transport (34) présente un levier pivotant (50), entraîné par un boisseau droit à bords plats curviligne rotatif (56), pour la course d'usinage et la course de déplacement du rail de transport (34), ainsi que deux barres de levage (42) commandées de manière curviligne ou bras pivotants (34) supportant le rail de transport (34) et le déplaçant, pendant les temps d'arrêt du levier pivotant (50), dans ses positions de pivotement extrêmes, perpendiculairement à son sens longitudinal et que le rail de transport (34) s'étend dans des guides coulissants (40) des barres de levage (42) ou des bras pivotants (74).

7. Installation de transport suivant l'une ou l'autre des revendications 1 à 6, caractérisée en ce qu'un arbre d'entraînement principal (44) est prévu parallèlement au rail de guidage (12), duquel sont dérivés, par des disques curvilignes et des boisseaux droits à bords plats (46, 56), les mouvements du rail de transport (34) et des dispositifs de serrage (62).

8. Installation de transport suivant l'une ou l'autre des revendications 1 à 7, caractérisée en ce que le rail de guidage (12) présente des parois latérales, à ou au-dessus d'une des quelles les dispositifs de serrage (62) s'engagent avec les porte-pièce (20) et que l'autre paroi latérale présente une surface oblique intérieure (72) recouvrant les porte-pièces (20), contre laquelle les porte-pièces (20) viennent s'appuyer par une surface oblique complémentaire.

9. Installation de transport suivant l'une ou l'autre des revendications 1 à 8, caractérisée en ce que le rail de transport (34) a une longueur mesurée entre le premier et le dernier entraîneur plus courte d'une distance entre entraîneurs x que la longueur du rail de guidage (12) mesurée entre les lignes de centre des dispositifs d'alimentation et de dégagement (28, 30).

FIG.1

EP 0 256 523 B1

FIG.2

EP 0 256 523 B1

FIG.3

EP 0 256 523 B1

FIG.4

EP 0 256 523 B1

FIG.5

EP 0 256 523 B1

FIG.6

FIG.7

FIG.8

FIG.9

FIG.10

FIG.11